(19) Europäisches Patentamt European Patent Office Office européen des brevets

(11) **EP 2 404 941 B1**

(12) **EUROPEAN PATENT SPECIFICATION**

(45) Date of publication and mention of the grant of the patent:
**14.08.2013 Bulletin 2013/33**

(51) Int Cl.:
*C08F 2/22* (2006.01)
*C08F 236/04* (2006.01)
*C08F 279/04* (2006.01)
*C08F 220/12* (2006.01)
*C08F 220/42* (2006.01)
*C08L 51/04* (2006.01)
*C08L 25/14* (2006.01)
*C08L 67/02* (2006.01)
*C08F 2/00* (2006.01)
*C08F 236/06* (2006.01)
*C08F 212/08* (2006.01)
*C08F 279/02* (2006.01)
*C08F 265/04* (2006.01)
*C08F 279/06* (2006.01)
*C08F 212/06* (2006.01)
*C08L 55/02* (2006.01)
*C08L 25/12* (2006.01)
*C08L 69/00* (2006.01)
*C08L 27/06* (2006.01)
*C08F 265/06* (2006.01)
*C08F 212/10* (2006.01)
*C08F 220/18* (2006.01)

*C08F 222/10* (2006.01)

(21) Application number: **10013983.1**

(22) Date of filing: **26.10.2010**

(54) **Method of manufacturing rubbery polymer and rubber reinforced thermoplastic resin composition using the same**

Verfahren zur Herstellung eines kautschukartigen Polymers und kautschukverstärkte thermoplastische Harzzusammensetzung damit

Procédé de fabrication de polymère caoutchouteux et composition de résine thermoplastique renforcée par caoutchouc l'utilisant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2010 KR 20100065030**

(43) Date of publication of application:
**11.01.2012 Bulletin 2012/02**

(73) Proprietor: **LG Chem, Ltd.**
**Youngdungpo-gu**
**Seoul 150-721 (KR)**

(72) Inventors:
• **Chai, Joo Byung**
**Yeosu-si**
**Jeollanam-do 555-803 (KR)**
• **Jung, Yu Sung**
**Yeosu-si**
**Jeollanam-do 555-050 (KR)**

- **Ahn, Bong Keun**
  **Yeosu-si**
  **Jeollanam-do 555-050 (KR)**
- **Han, Won Deok**
  **Suncheon-si**
  **Jeollanam-do 540-748 (KR)**
- **Yoo, Keun Hoon**
  **Gangnam-gu**
  **Seoul, 135-280 (KR)**
- **Lee, Chang Hong**
  **Yuseong-gu**
  **Daejeon 305-792 (KR)**

(74) Representative: **Goddar, Heinz J.**
   **Boehmert & Boehmert**
   **Pettenkoferstrasse 20-22**
   **80336 München (DE)**

(56) References cited:
   **US-A1- 2003 060 565     US-A1- 2003 114 580**
   **US-A1- 2004 192 843     US-A1- 2007 060 710**
   **US-A1- 2007 123 648     US-A1- 2007 123 657**
   **US-A1- 2009 118 393     US-B1- 7 019 049**

**Description**

**TECHNICAL FIELD**

The present invention relates to a method of manufacturing rubbery polymer and rubber reinforced thermoplastic resin composition using the same, and more specifically, to a method of manufacturing rubbery polymer and rubber reinforced thermoplastic resin composition using the same, in which the rubbery polymer can effectively control a particle diameter and heat of polymerization, as well as can drastically improve an impact resistance of the thermoplastic resin composition using the same and a thermal stability of the thermoplastic resin composition using the same when processing by injecting a part of monomers from the whole monomers at the beginning of reaction and then consecutively injecting the remaining monomer when manufacturing the rubbery polymer using an emulsion polymerization for the rubber reinforced thermoplastic resin composition that is used as the raw material for the impact resistance.

**BACKGROUND OF THE INVENTION**

The typical rubber reinforced thermoplastic resin is acrylonitrile-butadiene-styrene (ABS) resin, acrylonitrile-styrene-acrylonitrile (ASA) resin, methylmethacrylate-butadiene-styrene (MBS) resin, acrylic impact modifier (AIM) resin, and the like, those resins have rubbery polymer having a glass transition up to 0°C as a core, and are made through a graft copolymerization of shell layer selected in consideration of compatibility with a matrix resin. Generally, the resins are produced through the emulsion polymerization. Specifically ABS resin has generally an excellent impact resistance, and also excellent appearance properties, such as a pigmenting property, a surface gloss, and the like. However, the impact resistance and the appearance properties may largely vary according to the shapes of the rubber particles and the shell shapes of the graft copolymers.

The rubber particle produced through the emulsion polymerization generally has a small particle diameter of less than 100 nm (1000 Å) and a large particle diameter of at least 300 nm (1000 Å). Rubber latex having a partial diameter of at least 300 nm (3000 Å) and low gel content may generally be used for the effective impact resistance, and adding a small amount of rubber particle having a small particle diameter may be used in order to improve a gloss and other stiffness. In addition, the shell polymerization is generally performed by a graft polymerization of inside or surface of rubber particle in consideration of dispersibility of the rubber particles in a matrix phase, and the impact resistance and the appearance properties may vary with a degree of the grafting, shell components, morphology, a molecular weight, and the like. Generally, when the content of rubber particles is high, production efficiency on an industrial aspect is increased, but the formation of graft shell is unfavorable because of increasing the surface area that should be grafted. In addition, when the sizes of rubber particles are small and its content is increased, the impact resistance and the appearance properties become unfavorable because the formation of graft shell is insufficient.

The characteristics of the rubber particle for shell graft polymerization as mentioned above are most basic and also very important. It is important to find a new method of improving the efficiency of the shell polymerization, as well as the production efficiency of the rubber particle, i.e., specifically the rubber particle having a level of 300 nm (3000 Å), because there is a growing need for the shell polymerization under a high content of the rubber in order to improve the production efficiency, recently.

The general rubbery polymer is polymerized by single or mixture of diene-based monomer or acrylic acid ester-based monomer. Especially, the polymerization of polybutadiene latex that is used for ABS is performed by injecting monomers through all injecting or separately injecting of butadiene monomers, and then cooling heat of polymerization generated through a rapid thermal reaction using a cooler having a type that makes ammonia refrigerant or water of low temperature to pass through a reactor appearance or reactor inner coil. At this point, it is required that the polymerization is performed during a long period time, i.e., 30 hours to 50 hours generally in order to achieve a large particle diameter of at least 300 nm (3000 Å) by applying diene-based monomer.

The polymerization as mentioned above has many disadvantages in the aspect of industry. For example, the production efficiency may be deteriorated due to a long polymerization; the controls of a reaction heat/reaction pressure may be difficult due to the all injecting; and a wide distribution and inhomogeneity of latex particles may be formed due to the rapid thermal reaction.

The disadvantages of polymerized phase of the rubbery polymer and also the deteriorated production efficiency may be adversely affecting the impact resistance and the surface appearance of the rubber reinforced thermoplastic resin composition using the same. In order to solve the problems as mentioned above, the effects for improving the productivity and quality by using various ways are being done in the industrial world. As part of an effect, a high temperature of polymerization is applied to reduce the time of polymerization; after preparing a small particle diameter during relative short time, the particle diameter is enlarged through a partial agglomeration by injecting acid solution, etc; or a total solid content of polymers is increased during a long reaction time. However, those methods may only improve fragmentary parts, such as the improvement of the reaction time or the productivity, and may be difficult to solve the reaction time and the productivity of the polymerization at the same time.

In addition, the shell graft polymerization may be performed under the high content of the rubbery polymers in the aspect of improvements of the production efficiency, or at the same time, may be performed under the high solid content or short reaction time. Therefore, melt-blending of ABS powder obtained from the emulsion polymerization and a matrix resin produces a product, so that there is an advantage that ABS powder having high rubber content and high solid content may relatively produce many final products.

However, there may be possible that the reaction conditions as mentioned above make the control of reaction heat to be difficult, and also the shell formation may be not easy. The insufficiency of the shell formation as mentioned above may be possible to make the impact resistance and the properties of surface appearance to be deteriorated. Especially, since inner structures of recent electronic products may be complicated because of becoming a large-sized and thin film of the electronic products, the processing conditions when injection molding them may be deteriorated, and the insufficiency of the shell formation make the impact resistance and also the surface property of the injection molded material to be deteriorated.

US 2009/0118393 A1 discloses a method for preparing a thermoplastic resin including emulsion-polymerizing a conjugated diene compound monomer to prepare a rubber latex having an average particle diameter of 180 nm to 500 nm, a polymerization conversion ratio of at least 90% and a swelling index of 12 to 40, an average gel content of 70 to 95%, emulsion polymerizing 45 to 75 parts by weight of the rubber latex with 17 to 40 parts by weight of an aromatic vinyl compound and 4 to 20 parts by weight of a vinyl cyanide compound to prepare a graft copolymer latex and coagulating the graft copolymer latex with a coagulant at 60 to 80°C and aging the graft copolymer latex at 80 to 99°C to obtain a graft copolymer powder.

US 2003/0114580 A1 relates to a method of preparing an acrylonitril butadiene styrene (ABS) rubber latex by graft polymerizing butadiene rubber with the monomers of acrylonitrile and styrene through emulsion-polymerization.

US 2004/0192843 A1 discloses an ABS thermoplastic resin and preparation thereof.

US 2003/0060565 A1 relates to thermoplastic polycarbonate/graft polymer moulding compositions which are disclosed to have improved mechanical properties, such asimpact strength and elongation at break, and improved processing performance, such as flow properties.

US 7,019,049 B1 relates to an impact resistant resin composition disclosed to have superior balance of physical properties of chromacity, impact resistance and strength and a process for preparing the resin composition.

US 2007/0123648 A1 relates to a method for preparing a rubber-reinforced thermoplastic resin, a rubber-reinforced thermoplastic resin prepared by the same method and a rubber-reinforced thermoplastic resin composition using the same, wherein the rubber-reinforced thermoplastic resin is disclosed to have excellent heat-sealability and thermal stability maintaining good mechanical properties.

US 2007/0060710 A1 discloses a rubber latex used as a substrate for an impact modifier, a preparation method thereof and an impact modifier prepared using the rubber latex. The rubber latex includes a rubber monomer as a main component and has a decreasing gel content from a core to a shell.

US 2007/0123657 A1 relates to a method for preparing a graft rubber latex having a low residual monomer content and a method for preparing said graft rubber latex.

## SUMMARY OF THE INVENTION

An object of the present invention is to provide a method of effectively manufacturing a rubbery polymer having the large particles sizes, in which the rubbery polymer has an excellent productivity of polymerization by effectively controlling heat of the rubbery polymer, and also for easily manufacturing a graft shell polymerization under high rubber content. Another object of the present invention is to provide a method of greatly improving an impact resistance of the rubber reinforced thermoplastic resin and the heat stability of the rubber reinforced thermoplastic resin when processing the same.

In order to solve the problems of the conventional technologies as mentioned above, the present invention is to provide a method of manufacturing a rubbery polymer that can easily control heat of reaction and the particle diameters and to provide a method of graft shell polymerization that can make the surface properties to be excellent when producing the rubber reinforced thermoplastic resin using the same.

All the objects and other objects of the present invention can be achieved according to the present invention as described as follows:

To achieve the object of the present invention, the present invention provides a method of manufacturing a rubbery polymer having a glass transition temperature up to 0°C, a gel content of 70 to 90%, and a particle diameter of 250 to 400 nm (2500 to 4000 Å), in which 5 to 70 parts by weight of monomers is all-injected and 30 to 95 parts by weight of monomers is continuous-injected when the conversion rate of polymerization is 40 to 60% to obtain the rubbery polymer having a core-shell structure, based on 100 parts by weight of total monomers that are injected for manufacturing the rubbery polymer , wherein the rubbery polymer has an average particle diameter of 250 to 400 nm (2.500 to 4.000 Å), a gel content of 70 to 90%, and a glass transition temperature up to 0°C. The rubbery polymer having the particle diameter of 250 to 400 nm (500 to 4000 Å) and the gel content of 70 to 90 % is manufactured through the emulsion polymerization, and 50 to 70 parts by weight of the rubbery polymer is used for the graft shell polymerization. In other words, the present invention provides a graft copolymer consisted by including a core including 50 to 70 parts by weight of the rubbery polymer manufactured by the method of manufacturing the rubbery polymer , and wherein the monomers are a diene-based monomer or a diene-based monomer and an acrylic acid ester-based monomer having carbon atoms of 1 to 16; and a shell produced by the emulsion polymerization of 30 to 50 parts by weight of an aromatic vinyl compound and vinyl cyanide compound or (methyl)acrylic acid ester compound monomer.

In addition, the present invention provides the rubber reinforced thermoplastic resin by extruding, melting and mixing of 10 to 50 wt% of the graft copolymer, and 50 to 90 wt% of resin selected from the group consisting of acrylonitrile-styrene resin, polybutylene terephthalate resin, and polyvinyl chloride resin, and then processing in a type of pellet.

## DETAILED DESCRIPTION

Hereinafter, the embodiments of the present invention will be described in more detailed as the follows.

a) Preparation of Rubbery Polymer

A way of injecting monomer according to the present invention may be optionally applied in consideration of the production of the final particle diameter and the particle distribution. 5 to 70 parts by weight of the monomers are injected in one time at the beginning of reaction and 30 to 95 parts by weight of the remaining monomers is added by continuous injection when the conversion rate of polymerization is 40 to 60% to obtain the rubbery polymer having a core-shell structure, based on 100 parts by weight of the total monomers , and wherein the monomers are a diene-based monomer, or a diene-based monomer and an acrylic acid ester-based monomer having carbon atoms to 1 to 16. At this point, when the content of monomers added by continuous injection among the total monomers is less than 30 parts by weight, as the portion of monomers injected in one time at the beginning of reaction increases, the control of the particle distribution according to the initial heat is not effective; when the content of monomers added by continuous injection among the total monomers exceeds 95 parts by weight, the control of heat of polymerization has an advantage, but there is a chance that the particle diameter of the final products become smaller due to the insufficiency of the formation of the initial particle.

In addition, 5 to 20 wt% of monomers are preferably injected at a time or several times separately at the point of 30 to 70 % of conversion rate of polymerization. When the monomers is injected at the point of less than 30 % of conversion rate of polymerization, the heat of initial polymerization is too much, so that the polymer having a stable particle distribution and latex stability may be hardly obtained; when the monomer is injected at the point of excess 70 %, it may be occurred that the control of the particle distribution of the polymer at the latter part of the reaction may be in a difficult situation.

The rubbery polymer used in the present invention is manufactured by the emulsion polymerization, in which the rubbery polymer has a weight average particle diameter of 250 to 400 nm (2500 to 4000 Å), a gel content of 70 to 90 %, a glass transition temperature (Tg) of 0 °C, and the conversion rate of polymerization of at least 95 %.

The polymerization of the rubbery polymer will be described in detailed as follows:

The rubbery polymer using diene-based monomer is manufactured by using a method of all injecting 5 to 70 parts by weight of monomers based on 100 parts by weight of acrylic acid ester-based monomers having carbon atom 1~6, or diene-based monomers at the reaction temperature of 40 °C to 85 °C, along with 0.5 to 3.0 parts by weight of emulsifier, 10 to 70 parts by weight of water, 0.1 to 1.5 parts by weight of chain transfer agent, 0.05 to 2.5 parts by weight of polymerization initiator, 0.1 to 3.0 parts by weight of crosslinker, and 0.1 to 2.0 parts by weight of electrolyte, and then continuously injecting 30 to 95 parts by weight of the remaining monomers when the particle diameter becomes 100 to 200 nm (1000 to 2000 Å).

At this point, 5 to 20 wt% monomer among the monomers that are optionally and continuously injected can be possible to be all or separately injected at the conversion rate of polymerization of 30 to 70 %. The emulsifier, the chain transfer agent, and the electrolyte solution are preferably added by all or continuously injecting during continuously injecting of the monomers. In addition, at this point, the polymerization initiator is also able to be all injected or continuously injected in one time or several times as a type of emulsion.

At this point, the diene-based monomers that is able to be used may be 1,3-butadiene, isoprene, 2-chloro-1,3-butadiene, chloroprene, piperylene and the like, and acrylic acid ester-based monomer of carbon number 1 to 16 may be a mixture of one or two of butyl acrylate, methyl acrylate, ethyl acrylate, 2-ethylhexyl acrylate, and the like.

In addition, the crosslinker that is able to be used may be one having at least two unsaturated double bond that is able to be radical polymerized, such as divinyl benzene, allyl methacrylate, diallylphthalate, trimethylolpropane triacrylate, ethylene glycol diacrylate, triethylene glycol diacrylate, tetraethylene glycol diacrylate, polyethyleneglycol diacrylate, polyethyleneglycol dimethacrylate, and the like. Preferably, using the crosslinker having a high molecular weight and glycol structure, such as polyethylene glycol diacrylate, polyethyleneglycol dimethacrylate, and the like is favorable to increase swelling index through the control of the crosslink structure inside the rubber particle. 0.1 to 3 parts by weight of the crosslinker is preferably used based on 100 parts by weight of total monomers.

The rate of 30 to 70 wt% of acrylic acid ester-based monomer is preferably used based on 100 parts by weight of the rubbery polymer for the method of manufacturing the rubbery polymer in a mixed type of acrylic acid ester-based monomer and diene-based monomer. It can be also possible to use a method of consisting acrylic acid ester-based monomer as a core component and diene-based monomer as a shell component, a method of consisting diene-based monomer as a core component and acrylic acid ester-based monomer as a shell component, or a method of consisting two monomers in a same components as the core and shell components. the general method of all injecting. At this point, the emulsifier, the initiator and the chain transfer agent can be continuously injected through the same method with the polymerization of diene-based monomer.

The usable emulsifier is an absorptive emulsifier that can be industrially used or a reactive emulsifier, in which the absorptive emulsifier is an anionic emulsifier, such as potassium rosin acid, potassium fatty acid, sodium lauryl sulfate, alkyl benzene sulfonate, and the like, and 0.5 to 3.0 parts by weight of the absorptive emulsifier is used based on 100 parts by weight of the monomers. At this point, when using less than 0.5 parts by weight, it is difficult to secure effective polymerization stability; and when using over 3.0 parts by weight, there is a chance that the surface gloss, etc of the injection molded material is deteriorated due to a great quantity of the gas that is generated when processing according to the great quantity of the emulsifier that is remained in the final product. In addition, the absorptive emulsifier can be used as the mixture with the reactive emulsifier. At this point, the reactive emulsifier as mentioned above is a carboxyl acid-type anionic reactive emulsifier, an amide-based anionic reactive emulsifier, or a reactive emulsifier with acryloyl group, methacryloyl group, allyl group, or propenyl group, and the like, and 20 to 80 % of the reactive emulsifier is preferably applied based on the amount used of total emulsifier. When using the reactive emulsifier, there is an advantage that the total amount of the emulsifier can be reduced because the reactive emulsifier is generally involved in the polymerization unlike the existing absorptive emulsifier, so that it become has an electrostatic stability due to an ion and also dimensional stability.

When using less than 20 % of the reactive emulsifier based on the total amount of the emulsifier, the effects according to the using of the reactive emulsifier and the range of the reduction of the emulsifier are limited; and when using over 80 %, there is a disadvantage that the stability when generating the initial particle cannot be smoothly secured.

The initiator that can be used for manufacturing the rubbery polymer can be a pyrolysis initiator, such as persulfate initiator having a strong hydrophilic property, for example, potassium persulfate, ammonium persulfate, and sodium persulfate. A hydroperoxide initiator, such as diisopropylbenzene hydroperoxide, cumene hydroperoxide, tertiary butyl hydroperoxide, and the like, having a hydrophobic property can be also used with redox catalyst that can be generally applied, such as ferrous sulfate, dextrose, sodium pyrophosphate, or sodium sulfite. At the point of less than 40% of the conversion rate of the reaction, the peroxide initiator and the redox catalyst, which is of advantage to the starting reaction at relatively, lower temperature; and at the point thereafter, the persulfate initiator or peroxide initiator is preferable used.

The injected initiator can be used in a single or mixture of the hydrophilic and hydrophobic initiator for the polymerization, and 0.05 to 2.5 parts by weight of the initiator can be applied based on 100 parts by weight of the total monomer. Generally, when injecting less than 0.05 parts by weight, there can be a disadvantage that the polymerization cannot be smoothly performed; and when injecting over 2.5 parts by weight, there is a chance that the control of heat of the polymerization cannot be easily preferred due to the locally rapid thermal reaction.

In addition, the injected initiator can be continuously injected over the continuous monomer injection or separately injected in one time or several times for the polymerization. The injected initiator can be injected in a single, or a type of emulsion produced through the high-speed stirring with the emulsifier, and the like, and preferably injected in a type of emulsion. The absorptive emulsifier as mentioned above is useful as the emulsifier that is used for preparing the emulsion, and 20 to 80 wt% of the reactive emulsifier can be used based on the amount of total emulsifier in some cases.

The chain transfer agent can be generally used for the emulsion polymerization, for example, a type of mercaptan, such as n-dodecyl mercaptan, n-decyl mercaptan, t-dodecyl mercaptan, and the like, and alpha methyl styrene dimmer, and 0.1 to 2.0 parts by weight of the chain transfer agent can be applied, and preferably 0.1 to 0.5 parts by weight of the chain transfer agent can be applied based on 100 parts by weight of the monomer.

The chain transfer agent for manufacturing the rubbery polymer has an advantage that it can act as a catalyst of the initiator when the initiator is a type of peroxide, so that when using less than 0.1 parts by weight, there is a disadvantage that it cannot facilitate the initial reaction, smoothly. In addition, the chain transfer agent for manufacturing the rubbery polymer is an important factor for determining the final gel content. When using a great quantity of the chain transfer agent, the gel content is decreased, so that ABS polymerization can have a favorable effect to the impact resistance; but when using over 2.0 parts by weight, i.e., too great quantity, it is difficult to recover the un-reacted monomer and is not good in the aspect of the industrial production efficiency due to the disadvantage of low conversion rate of polymerization.

20~80 wt% of the chain transfer agent may be all injected when all injecting the rubbery monomer, and the remaining monomer may be mixed in the emulsion with the initiator, the electrolyte solution, and the like, and then continuously injected.

The electrolyte that can be used for manufacturing the rubbery polymer is one or at least two mixture selected from the group consisting of KCl, NaCl, $KHCO_3$, $K_2CO_3$, $Na_2CO_3$, $NaHSO_4$, and the like, and 0.1 to 2 parts by weight of the electrolyte can be used, and preferably 0.5 to 1.5 parts by weight can be used.

The electrolyte for the rubbery polymer is an important factor for determining the particle diameter of the rubbery polymer, and there is an advantage that the amount is increased, so that the particle diameter is generally increased. However, when using over 2 parts by weight, i.e., a great quantity of the electrolyte, there is a disadvantage that the polymerization rate is reduced.

The temperature of the polymerization is not greatly limited, but the temperature of the polymerization is preferably within the range of 40 °C to 85 °C. At the beginning of the polymerization, the reaction is preformed at the relatively low temperature, i.e., 40 °C to 55 °C, and then at the point of at least 80 % of the conversion rate of the polymerization, the reaction is performed at the relatively high temperature, i.e., 50 C to 85 °C, so that it can be favorable to the stability and the impact resistance of the latex.

b) Preparation of Graft Polymer

The rubbery polymer that is prepared from the method of a) has a shell layer prepared from the graft copolymerization by the emulsion polymerization, and the method of manufacturing the graft copolymer will be described in more detailed as follows:

The graft copolymer is generally prepared using the emulsion polymerization of the monomer consisting of 30 to 50 parts by weight of styrene and styrene derivatives, such as aromatic vinyl compound and vinyl cyanide compound or (methyl)acrylic acid ester compound, based on 50 to 70 parts by weight of the rubber polymer , wherein the rubbery polymer has an average particle diameter of 250 to 400 nm (2.500 to 4.000 Å), a gel content of 70 to 90%, and a glass transition temperature of up to 0°C. 10 to 40 wt% of the vinyl cyanide compound or (methyl)acrylic acid ester compound is preferably used based on 100 parts by weight of the monomer that is used for the total shell copolymerization.

At this point, the usable aromatic vinyl compound is α-methylstyrene, o-ethylstyrene, p-ethylstyrene or vinyltoluene, and the like. The usable vinyl cyanide compound is the monomer, such as acrylonitrile, methacrylonitrile, and the like. The usable methacrylic acid ester is the monomer, such as methyl methacrylate, ethyl methacrylate, and the like. The usable acrylic acid ester is the monomer, such as methyl acrylate, ethyl acrylate, butyl acrylate, and the like.

The method of manufacturing the graft copolymer from the emulsion polymerization is not greatly limited, but generally 30 to 50 parts by weight of the monomer that is used for manufacturing the graft copolymer based on 50 to 70 parts by weight of the rubbery polymer is injected with the emulsifier, the chain transfer agent, a graft auxiliary, and the initiator. And then the reaction is maintained until the 98~99 % level of the conversion rate of the reaction, and stopped.

At this point, the absorptive emulsifier of carboxylate type, such as potassium rosin acid and potassium fatty acid, sulfonate-based absorptive emulsifier, such as sodium lauryl sulfate, alkyl benzene sulfonate, and the like, and the reactive emulsifier as mentioned in the rubbery polymer can be used in a single or mixture as the usable emulsifier.

0.5 to 2.0 parts by weight of the emulsifier is preferably used based on 100 parts by weight of the total graft copolymer (A). The only reactive emulsifier can be used or the reactive emulsifier with 20~80 wt% of the absorptive emulsifier can be used as the usable emulsifier. Generally, when using less than 0.5 parts by weight of the emulsifier that is used for the graft copolymerization, there is a disadvantage that the stability of the latex can not be secured; and when using over 2.0 parts by weight, the factor that can deteriorate the surface of the molded material due to the gas generation and water absorption can be generated according to the great quantity of the remaining emulsifier in the final thermoplastic resin composition.

The chain transfer agent for manufacturing the graft copolymer may be n-dodecyl mercaptan, n-decyl mercaptan, t-dodecyl mercaptan, alpha methyl styrene dimmer, and the like, and 0.2 to 1.0 parts by weight of tertiary dodecyl mercaptan is preferably applied.

0.01 to 1 parts by weight of the initiator can be used, and the usable initiator is not greatly limited. However, it is favorable to use peroxide initiator, such as tertiary butyl hydroperoxide, cumene hydroperoxide, and diisopropylbenzene hydroperoxide, with the redox catalyst because of securing the impact resistance when copolymerizing the graft and the stability of the latex.

0.05 to 0.5 parts by weight of the graft auxiliary can be used. The graft auxiliary that can be possible to radical polymerize having at least two unsaturated double bonds can be used, and for example, there are divinyl bezene, allyl methacrylate, diallyl phthalate, ethylene glycol diacrylate, triethylene glycol diacrylate, tetraethylene glycol diacrylate, polyethylene glycol diacrylate, poly ethylene glycol dimethacrylate, and the like. 0.1 to 0.3 parts by weight of the graft auxiliary is preferably applied in order to achieve effective graft rate under high rubber content.

In addition, a method of injecting monomer when manufacturing the graft copolymer can be selected from a method of directly injecting each monomer to the reactor, respectively, a method of injecting the mixture of monomers, and a method of injecting the emulsion of monomers prepared by mixing of the emulsifier, water, and the initiator. Optionally, when injecting the monomer, 0 to 20 wt% of the monomer is injected using a batch injection way, and the remaining monomer can be possible to be injected using a continuous injection way. In addition, a method of injecting may include a method of continuously injecting the total amount, or a method of repeating 3~4 times of the batch injection way at regular intervals.

The graft copolymer of which the reaction is stopped may be agglomerated by the metallic salts, such as calcium chloride, magnesium sulfate, aluminum sulfate, and an acid, such as sulfuric acid, phosphorous acid, citric acid, and the like, and then may separate the solid, may be washed, may be dehydrated, and may be dried to prepare in a type of powder. The graft copolymer in a type of powder can be generally used as the mixture of the thermoplastic resin copolymer that is prepared by the solution polymerization.

In addition, when performing the agglomeration using an acid during the process of the agglomeration, an alkaline solution, such as the sodium hydroxide, potassium hydroxide, and the like can be used during washing in consideration of the concentration of the acid used.

C) Preparation of Rubber Reinforced Thermoplastic Resin Composition

Generally, the graft copolymer prepared by the method as mentioned above is melted and mixed with the thermoplastic resin using the extrusion process, and then processed in a type of pellet to prepare the final rubber reinforced thermoplastic resin. At this point the general thermoplastic resin may be a resin, such as acrylonitrile-styrene copolymer (SAN) resin, polybutyleneterephthalate (PBT), and poly vinyl chloride (PVC). The resin that can be used is not greatly limited, and when requiring the impact resistance, it can be freely used.

In addition, for melting and molding through the extrusion and injection of the graft copolymer and the thermoplastic resin (B), a lubricant, a heat stabilizer, and other additives for processing can be used, but a type of those is not greatly limited.

The rubber reinforced thermoplastic resin composition prepared by using the method as mentioned above has an excellent impact resistance unlike the existing method and also it has an advantage that it can compensate the disadvantage of the existing resin for sensitive properties, such as the pigmenting property, a high temperature molding heat stability, a water adsorption property, a gloss, and the like.

Hereinafter, the present invention will be described in more detailed with reference to Examples, but Examples is just for description of the present invention, and it will not limit the range of the present invention.

EXAMPLE

[Example 1]

Preparation of Rubbery Polymer - A1

After 50 parts by weight of ion-exchanged water was injected to a nitrogen-substituted reactor for a pressurized reaction, 0.8 parts by weight of potassium fatty acid, 1.0 parts by weight of potassium rosin acid, and 1.0 parts by weight of potassium carbonate were injected at the room temperature and then stirred. 40 parts by weight of 1,3-butadiene, 0.3 parts by weight of tertiary dodecyl mercaptan, 0.8 parts by weight of poly ethylene glycol diacrylate, and 0.3 parts by weight of diisopropylbenzene hydroperoxide were injected, and the reaction temperature was increased to 40 °C, and then proceeded during 6 hours. When the conversion rate of the polymerization reach to 60 %, 15 parts by weight of 1,3-butadiene was further injected over 20 minutes, and then the reaction temperature was increased to 55 °C. And then, 45 parts by weight of 1,3-butadiene was continuously injected over 8 hours, and at the point of the conversion rate 80%, the reaction temperature was increased to 75 °C. At this point, the emulsion consisting of 4 parts by weight of ion-exchanged water, 0.5 parts by weight of potassium rosin acid, and 0.3 parts by weight of tertiary butyl hydroperoxide were injected over 6 hours at the point of the continuous injection start. And then, after 0.0003 parts by weight of ferrous sulfate, 0.05 parts by weight of dextrose, 0.04 parts by weight of sodium pyrophosphate, and 0.3 parts by weight of tertiary butyl hydroperoxide were further injected, the reaction was maintained for 4 hours, and then stopped. The conversion rate of the polymerization of diene-based rubber latex obtained was 98.0%, and its particle diameter was 320 nm (3200 Å).

Preparation of Graft Copolymer - B 1

70 parts by weight of rubbery polymer (A-1), 60 parts by weight of ion-exchanged water, 0.5 parts by weight of potassium fatty acid, 7.5 parts by weight of styrene, 2.5 parts by weight of acrylonitrile, and 0.3 parts by weight of polyethylene glycol diacrylate were injected to the nitrogen-substituted reactor, the reactor was fully stirred at 25 °C, and then the temperature of the reactor was increased at 50 °C. And then 0.08 parts by weight of tertiary butyl hydroperoxide, 0.003 parts by weight of ferric sulfate, 0.005 parts by weight of dextrose, 0.025 parts by weight of sodium pyrophosphate, and 2.5 parts by weight of ion-exchanged water were injected to the reactor, and the reaction was proceeded while the reaction temperature was increased to 65 °C for 1 hour. And then the emulsion consisting of 0.5 parts by weight of potassium fatty acid, 15 parts by weight of styrene, 5 parts by weight of acrylonitrile, 0.4 parts by weight of tertiary dodecyl mercaptan, 0.1 parts by weight of diisopropylbenzene peroxide, and 20 parts by weight of ion-exchanged water was continuously injected to the reactor for 1 hour. And then 0.05 parts by weight of cumene hydroperoxide, 0.003 parts by weight of ferrous sulfate, 0.005 parts by weight of dextrose, 0.025 parts by weight of sodium pyrophosphate, and 2.5 parts by weight of ion-exchanged water were further injected, the reaction temperature was increased to 80 °C, the reaction was proceeded for 1 hour, and then stopped. At this point, the conversion rate of the final reaction was 98.2 %.

Preparation of Rubber Reinforced Thermoplastic Resin - C1

Based on 21.5 parts by weight of the graft copolymer (B-1) prepared by the agglomeration drying process, 78.5 parts by weight of styrene-acrylonitrile copolymer resin (92HR-LG Chemical), 1.5 parts by weight of lubricant, and 0.2 parts by weight of first heat stabilizer were added, extruded under the temperature condition of 200 °C , and then molded at the same temperature to prepare a sample for estimating a property of matter. The properties of matter about the sample were listed in Table 1.

[Example 2]

Preparation of Rubbery Polymer-A2

After 50 parts by weight of ion-exchanged water was injected to a nitrogen-substituted reactor for a pressurized reaction, 0.8 parts by weight of potassium fatty acid, 1.0 parts by weight of potassium rosin acid, and 1.0 parts by weight of potassium carbonate were injected at the room temperature and then stirred. After 40 parts by weight of butyl acrylate, 0.5 parts by weight of ethylene glycol diacrylate, 0.3 parts by weight of tertiary dodecyl mercaptan, and 0.3 parts by weight of diisopropylbenzene hydroperoxide were injected, the reaction temperature was increased to 40 °C, and then proceeded during 6 hours. When the conversion rate of the polymerization reach to 60 %, 15 parts by weight of butylacrylate was further injected over 20 minutes, and then the reaction temperature was increased to 55 °C. And then, 45 parts by weight of 1,3-butadiene was continuously injected over 8 hours, and at the point of the conversion rate 80%, the reaction temperature was increased to 75 °C. At this point, the emulsion consisting of 4 parts by weight of ion-exchanged water, 0.5 parts by weight of potassium rosin acid, and 0.3 parts by weight of tertiary butyl hydroperoxide were injected over 6 hours at the point of the continuous injection start. And then, after 0.0003 parts by weight of ferrous sulfate, 0.05 parts by weight of dextrose, 0.04 parts by weight of sodium pyrophosphate, and 0.3 parts by weight of tertiary butyl hydroperoxide were further injected, the reaction was maintained for 4 hours, and then stopped. The conversion rate of the polymerization of diene-based rubber latex obtained was 97.5%, and its particle diameter was 305 nm (3050 Å).

Preparation of Graft Copolymer - B2

The same method with the method of manufacturing the rubber reinforced thermoplastic resin in Example 1 was used, except that the rubbery polymer (A2) was applied. At this point, the conversion rate of the final reaction was 98.0 %.

Preparation of Rubber Reinforced Thermoplastic Resin - C2

The same method with the method of manufacturing the rubber reinforced thermoplastic resin in Example 1, and the properties of matter about this were listed in Table 1.

[Example 3]

Preparation of Rubbery Polymer - A3

After 50 parts by weight of ion-exchanged water was injected to a nitrogen-substituted reactor for a pressurized reaction, 0.8 parts by weight of potassium fatty acid, 1.0 parts by weight of potassium rosin acid, and 1.0 parts by weight of potassium carbonate were injected at the room temperature and then stirred. 40 parts by weight of 1,3-butadiene, 0.3 parts by weight of tertiary dodecyl mercaptan, 0.8 parts by weight of poly ethylene glycol diacrylate, and 0.3 parts by weight of diisopropylbenzene hydroperoxide were injected, and the reaction temperature was increased to 40 °C, and then proceeded during 6 hours. When the conversion rate of the polymerization reach to 60 %, 15 parts by weight of 1,3-butadiene was further injected over 20 minutes, and then the reaction temperature was increased to 55 °C. And then, 45 parts by weight of 1,3-butadiene was continuously injected over 8 hours, and at the point of the conversion rate 80%, the reaction temperature was increased to 75 °C. At this point, the emulsion consisting of 4 parts by weight of ion-exchanged water, 0.3 parts by weight of potassium rosin acid, 0.2 parts by weight of polyoxyethylene alkylphenyl prophenyl ethers sulfate (Commercial Name: Hitenol BC-10), and 0.3 parts by weight of tertiary butyl hydroperoxide were injected over 6 hours at the point of the continuous injection start. And then, after 0.0003 parts by weight of ferrous sulfate, 0.05 parts by weight of dextrose, 0.04 parts by weight of sodium pyrophosphate, and 0.3 parts by weight of tertiary butyl hydroperoxide were further injected, the reaction was maintained for 4 hours, and then stopped. The conversion rate of the polymerization of diene-based rubber latex obtained was 97.5%, and its particle diameter was 315 nm (3150 Å)

Preparation of Graft Copolymer - B3

70 parts by weight of rubbery polymer (A-1), 60 parts by weight of ion-exchanged water, 0.3 parts by weight of polyoxyethylene alkylphenyl prophenyl ethers sulfate (Commercial Name: Hitenol BC-10), 7.5 parts by weight of styrene, 2.5 parts by weight of acrylonitrile, and 0.3 parts by weight of polyethylene glycol diacrylate were injected to the nitrogen-substituted reactor, the reactor was fully stirred at 25 °C, and then the temperature of the reactor was increased at 50 °C. And then 0.08 parts by weight of tertiary butyl hydroperoxide, 0.003 parts by weight of ferric sulfate, 0.005 parts by weight of dextrose, 0.025 parts by weight of sodium pyrophosphate, and 2.5 parts by weight of ion-exchanged water were injected to the reactor, and the reaction was proceeded while the reaction temperature was increased to 65 °C for 1 hour. And then the emulsion consisting of 0.2 parts by weight of polyoxyethylene alkylphenyl prophenyl ethers sulfate (Commercial Name: Hitenol BC-10, 15 parts by weight of styrene, 5 parts by weight of acrylonitrile, 0.4 parts by weight of tertiary dodecyl mercaptan, 0.1 parts by weight of diisopropylbenzene peroxide, and 20 parts by weight of ion-exchanged water was continuously injected to the reactor for 1 hour. And then 0.05 parts by weight of cumene hydroperoxide, 0.003 parts by weight of ferrous sulfate, 0.005 parts by weight of dextrose, 0.025 parts by weight of sodium pyrophosphate, and 2.5 parts by weight of ion-exchanged water were further injected, the reaction temperature was increased to 80 °C, the reaction was proceeded for 1 hour, and then stopped. At this point, the conversion rate of the final reaction was 98.5 %.

Preparation of Rubber Reinforced Thermoplastic Resin - C3

The same method with the method of manufacturing the rubber reinforced thermoplastic resin in Example 1, and the properties of matter about this were listed in Table 1.

[Comparative Example 1]

Preparation of Rubbery Polymer - A4

After 50 parts by weight of ion-exchanged water was injected to a nitrogen-substituted reactor for a pressurized reaction, 0.8 parts by weight of potassium fatty acid, 1.0 parts by weight of potassium rosin acid, and 1.0 parts by weight of potassium carbonate were injected at the room temperature and then stirred. 40 parts by weight of 1,3-butadiene, 0.3 parts by weight of tertiary dodecyl mercaptan, and 0.3 parts by weight of potassium persulfate were injected, and the reaction temperature was increased to 70 °C, and then proceeded during 6 hours. When the conversion rate of the polymerization reach to 60 %, 30 parts by weight of 1,3-butadiene, 0.5 parts by weight of potassium rosin acid, and 0.2 parts by weight of potassium persulfate was further injected in one time, and then the reaction was further proceeded for 6 hours. And then, 30 parts by weight of 1,3-butadiene, 0.5 parts by weight of potassium rosin acid, and 0.2 parts by weight of potassium persulfate were injected in one time, and then the polymerization was further proceeded for 4 hours while the reaction temperature was increased to 80 °C. At the point of the conversion rate 80%, after injecting 4 parts by weight of ion-exchanged water, 0.5 parts by weight of potassium rosin acid, and 0.2 parts by weight of potassium persulfate, the further reaction was proceeded for 4 hours under 80 °C, and then stopped. The conversion rate of the polymerization of diene-based rubber latex obtained was 90.0%, and its particle diameter was 280 nm (2800 Å)

Preparation of Graft Copolymer - B4

The same method with the method of manufacturing the rubber reinforced thermoplastic resin (A1) in Example 1 was used, except that the rubbery polymer (A4) was applied. At this point, the conversion rate of the final reaction was 97.0 %.

Preparation of Rubber Reinforced Thermoplastic Resin - C4

The same method with the method of manufacturing the rubber reinforced thermoplastic resin (C1) in Example 1, and the properties of matter about this were listed in Table 1.

[Comparative Example 2]

Preparation of Rubbery Polymer - A5

After 50 parts by weight of ion-exchanged water was injected to a nitrogen-substituted reactor for a pressurized reaction, 0.8 parts by weight of potassium fatty acid, 1.0 parts by weight of potassium rosin acid, and 1.0 parts by weight of potassium carbonate were injected at the room temperature and then stirred. After 40 parts by weight of butyl acrylate, 0.2 parts by weight of arylmethacrylate, 0.3 parts by weight of tertiary dodecyl mercaptan, and 0.3 parts by weight of potassium persulfate were injected, the reaction temperature was increased to 70 °C, and then proceeded during 6 hours. When the conversion rate of the polymerization reach to 60 %, 30 parts by weight of 1,3-butadiene, 0.5 parts by weight of potassium rosin acid, and 0.2 parts by weight of potassium persulfate was further injected in one time, and then the reaction was further proceeded for 6 hours. And then, 30 parts by weight of 1,3-butadiene, 0.5 parts by weight of potassium rosin acid, and 0.2 parts by weight of potassium persulfate were injected in one time, and then the polymerization was further proceeded for 4 hours while the reaction temperature was increased to 80 °C. At the point of the conversion rate 85%, after injecting 4 parts by weight of ion-exchanged water, 0.5 parts by weight of potassium rosin acid, and 0.2 parts by weight of potassium persulfate, the further reaction was proceeded for 4 hours under 80 °C, and then stopped. The conversion rate of the polymerization of diene-based rubber latex obtained was 93.0%, and its particle diameter was 278 nm (2780 Å).

Preparation of Graft Copolymer - B5

The same method with the method of manufacturing the rubber reinforced thermoplastic resin (A1) in Example 1 was used, except that the rubbery polymer (A5) was applied. At this point, the conversion rate of the final reaction was 98.0 %.

Preparation of Rubber Reinforced Thermoplastic Resin - C5

The same method with the method of manufacturing the rubber reinforced thermoplastic resin (C1) in Example 1, and the properties of matter about this were listed in Table 1.

[Testing Example]

The rubbery polymer, the graft copolymer and the rubber reinforced thermoplastic resin composition prepared by Example 1 to Example 3 and Comparative Example 1 to Comparative Example 2 were measured by the method as follows:

[Method of Measuring Properties]

[0076]  * Measurement of Particle Diameter of Latex: A weight average particle diameter was measured by using Nicomp equipment.
[0077]  * Measurement of Gel Content: Methanol was injected to the obtained latex, and then sulfuric acid was added to precipitate, and then washed/dried to extract the solid (A) that is rubber components. After toluene was added and maintained for 18 hours, it was filtered using a mesh with 80 meshes, and then the remainder was dried. The weight (B) of it was weighted and the gel content was measured using the following equation:

$$\text{Gel Content} = \text{Weight of Rubbery Polymer that is remained after dissolving (B)/}$$

$$\text{Initial Rubbery Polymer (A)}$$

[0078]   * Swelling Index: The solid having rubber component that is obtained in order to measure the gel content was added to toluene, and then maintained for 18 hours. The remainder that is remained after filtering using the mesh with 80 meshes was dried (A), and then maintained in toluene solvent for 24 hours. The weight (B) of swelled rubbery resin was measured and then swelling index was measured from the following equation:

$$\text{Swelling Index} = \text{(Weight of swelled rubbery resin (B)/ Dried initial rubbery resin}$$

$$\text{(A)/Dried initial rubbery resin (A)}$$

[0079]   * Graft: Rate: 10 g of the rubber reinforced graft copolymer powder was dried in an oven of 60 □ to remove water. The weight (A) of it was measured. The dried rubber re-inforced graft copolymer powder was stirred in 100 ml of acetone solvent and dried for 24 hours. The gel content was separated using centrifuge at 10000 RPM, and then the remainder that was not dissolved in acetone solvent was dried in the oven, and its weight was measured. The graft rate was measured using the following equation:

$$\text{Graft Rate} = \text{(B-A* rubber content that is injected in the graft polymerization \%)/(A*}$$

$$\text{rubber content that is injected I the graft polymerization \%)}$$

[0080]   * Izod Impact Strength: A specimen having 1/4" thickness was prepared, and measured according to ASTM D256. Its unit is Kg·cm/cm.

[0081]   * Gloss: The pellet that was obtained from the extruder was ejaculated at 200 □, and the gloss of the obtained specimen about 20 ° light was measured.

[0082]   * Detention Discoloration: The pellet that is obtained from the extruder was putted in the injection molding machine, and kept for 20 minutes at 270 □ to obtain the gloss specimen. L. a, b values were obtained using suga color computer, and then compared to the color values of the gloss specimen that was ejaculated at 200 □. The values were calculated according to the following equation.

$$\Delta E = \sqrt{(L'-L)^2 + (a'-a)^2 + (b'-b)^2}$$

[0083]   * Detention Gloss: The pellet that was obtained from the extruder was putted in the injection molding machine, and kept for 20 minutes at 270 □ to obtain the gloss specimen. 45 ° gloss of the specimen was measured using the gloss meter reader according to ASTM D528, and then compared to the gloss of the specimen that was ejaculated at 200 □. The values were expressed as a percentage.

[0084]   * Flowability: it was measured according to ASTM D1238 at 220 □ and 10 kg.

[0085]   * Latex stability: The latex stability of the rubbery polymer was measured by expressing as a percentage about the total solid content that was measured in a coagulated material that was out through the mesh having 100 meshes after leaving for 60 minutes using Homo-mixer (T.K Robomics) at 10,000 RPM after filtering 500 g of the finial polymerization latex obtained using the mesh having 100 meshes. In addition, the coagulation time of the polymer for the graft copolymer at 15,000 RPM was measured and reported. The polymer having at least 60 minutes of the coagulation time was classified as the stable latex.

[0086]   * Heat of Polymerization: For the polymerization of the rubbery polymer, the difference between the maximum exothermic section in the exothermic section on set temperature values and set temperature values was shown.

[Table 1]

|  |  | Example 1 | Example 2 | Example 3 | Comparative Example 4 | Comparative Example 5 |
|---|---|---|---|---|---|---|
| Rubbery Polymer (A) | Conversion Rate of Polymerisation (%) | 98.0 | 97.5 | 97.5 | 90.0 | 93.0 |
|  | Weight Average Particle Diameter (nm) | 320 | 305 | 315 | 280 | 278 |
|  | Polymerization Time (hr) | 18 | 18 | 18 | 24 | 24 |
|  | Gel Content (%) | 87 | 86 | 88 | 83 | 84 |
|  | Swelling Index | 16.8 | 15.3 | 18.0 | 13.5 | 11.2 |
|  | Latex stability (%) | <0.01 | <0.03 | <0.01 | 0.5 | 1.2 |
|  | Heat of Polymerization ($\Delta T$) | < 1 °C | < 1 °C | <1 °C | 7°C | 15 °C |
| Graft Copolymer (B) | Conversion Rate of Polymerization (%) | 98.2 | 98.0 | 98.5 | 97.0 | 98.0 |
|  | Graft Rate (%) | 45 | 43 | 47 | 27 | 25 |
|  | Latex stability (%) | 60 min | 60 min | 60 min | 15 min | 5 min |
| Rubber Reinforced Thermoplastic Resin (C) | Impact Strength (1/4") | 27 | 23 | 28 | 17 | 12 |
|  | Flowability | 20 | 22 | 19 | 19 | 18 |
|  | Gloss (20°) | 95 | 96 | 99 | 84 | 76 |
|  | Detention Discoloration ($\Delta E$) | 0.25 | 0.21 | 0.11 | 0.42 | 0.60 |
|  | Detention Gloss (%) | 1.2 % | 2.5% | 0.5% | 6.8% | 15% |

[0087] As shown in above Table 1, a rubbery latex having a large diameter can be effectively obtained by controlling heat of polymerization and particle diameter in a short reaction time unlike the existing methods, and at the same time, even if the graft copolymer and rubber reinforced thermoplastic resin have a high rubber content, an excellent impact resistance and the heat stability of processing can be obtained by effectively forming a graft shell.

## Claims

1. A method of manufacturing a rubbery polymer having an average particle diameter of 400 nm (2500 to 4000 Å), a gel content of 70 to 90 %, and a glass transition temperature up to 0 °C, wherein 5 to 70 parts by weight of monomers are injected in one time and 30 to 95 parts by weight of the monomer are added by continuous injection when the conversion rate of polymerization is 40 to 60 % to obtain the rubbery polymer having a core-shell structure, based on 100 parts by weight of the monomers for manufacturing the rubbery polymer, and
wherein the monomers are a diene-based monomer, or a diene-based monomer and an acrylic acid ester-based monomer having carbon atoms of 1 to 16.

2. The method of manufacturing the rubbery polymer of claim 1, wherein 5 to 20 wt% of the monomers which are added by continuous injection, are injected in one time or added by divided injection when a conversion rate of polymerization is 30 to 70 %, and a remaining monomers are added by continuous injection.

3. The method of manufacturing the rubbery polymer of claim 2, wherein an emulsified liquid comprising an initiator, an emulsifier, a chain transfer agent and an electrolyte, is injected in one time or is added by continuous injection when the monomers is added by continuous injection.

4. The method of manufacturing the rubbery polymer of claim 1,
   wherein the diene-based monomer is at least one selected from the group consisting of 1,3-butadiene, isoprene 2-chloro-1,3-butadiene, chloroprene and pyperylene and their derivatives; and
   wherein the acrylic acid ester-based monomer having carbon atom of 1 to 16 is selected from the group consisting of butyl acrylate, methyl acrylate, ethyl acrylate and 2-ethylhexyl acrylate.

5. The method of manufacturing the rubbery polymer of claim 1, wherein 30 to 70 wt% of diene-based monomer or acrylic acid ester-based monomer based on 100 parts by weight of the monomer is injected in one time.

6. The method of manufacturing the rubbery polymer of claim 1, wherein the monomer is mixed with a crosslinker and then is used.

7. The method of manufacturing the rubbery polymer of claim 6, wherein the crosslinker is selected from the group consisting of divinyl benzene, allyl methacrylate, diallylphthalate, trimethylolpropane, triacrylate, ethylene glycol diacrylate, triethylene diacrylate, tetraethylene diacrylate, polyethyleneglycol diacrylate and polyethyleneglycol dimethacrylate; and
   0.1 to 3 parts by weight of the crosslinker is used based on 100 parts by weight of the monomer.

8. The method of manufacturing the rubbery polymer of claim 3, wherein the initiator is peroxide initiator or persulfate initiator,
   wherein the peroxide initiator is selected from the group consisting of diisopropylbenzene hydroperoxide, cumene hydroperoxide and tertiary butyl hydroperoxide;
   the persulfate initiator is selected from the group consisting of potassium persulfate, ammonium persulfate and sodium persulfate; and
   0.05 to 2.5 parts by weight of the initiator is used, based on 100 parts by weight of the monomer.

9. The method of manufacturing the rubbery polymer of claim 8, wherein the initiator is mixed with at least one redox catalyst, and then used.

10. The method of manufacturing the rubbery polymer of claim 3, wherein the emulsifier is an absorptive emulsifier selected from the group consisting of potassium rosin acid, potassium fatty acid, sodium lauryl sulfate and alkyl benzene sulfonate; a carboxyl acid-based anionic reactive emulsifier; an amide-based anionic reaction emulsifier; or a reactive emulsifier having acryloyl group, methacryloyl group, or allyl group, or prophenyl group; and
   0.5 to 3 parts by weight of the emulsifier is used based on 100 parts by weight of the monomer.

11. The method of manufacturing the rubbery polymer of claim 10, wherein a mixture of 20 to 80 wt% of the reactive emulsifier and 20 to 80 wt% of the absorptive emulsifier is used.

12. A graft copolymer, comprising:

   a core comprising 50 to 70 parts by weight of the rubbery polymer produced by the method of claim 1, wherein the rubbery polymer has an average particle diameter of 250 to 400 nm (2500 to 4000 Å) a gel content of 70 to 90 %, and a glass transition temperature up to 0 °C; and
   a shell surrounding the core and prepared by emulsion polymerization of 30 to 50 parts by weight of an aromatic vinyl compound and a vinyl cyanide or (methyl)acrylic acid ester monomer.

13. The graft copolymer of claim 12, wherein the aromatic vinyl compound is at least a compound selected from the group consisting of styrene, α-methylstyrene, o-ethylstyrene, p-ethylstyrene and vinyltoluene, or their derivatives.

14. The graft copolymer of claim 12, wherein the vinyl cyanide compound is at least a compound selected from the group consisting of acrylonitrile, methacrylonitrile and ethacrylonitrile, or their derivatives.

15. A rubber reinforced thermoplastic resin manufactured by extruding, melting, and mixing 10 to 50 wt% of the graft copolymer according to claim 12, and 50 to 95 wt% of resin selected from the group consisting of acrylonitrile-styrene resin, polybutyleneterephthalate resin and poly vinyl chloride resin, and then processing in a type of pellet.

**Patentansprüche**

1. Verfahren zum Herstellen eines kautschukartigen Polymers mit einem mittleren Partikeldurchmesser von 250 bis 400 nm (2500 bis 4000 Å), einem Gelgehalt von 70 bis 90% und einer Glasübergangstemperatur bis zu 0°C, wobei 5 bis 70 Gewichtsteile Monomere in einem Mal injiziert werden und 30 bis 95 Gewichtsteile des Monomers durch kontinuierliche Injektion zugegeben werden, wenn die Umsatzrate der Polymerisation 40 bis 60% beträgt, um das kautschukartige Polymer mit einer Kern-Mantel-Struktur zu erhalten, basierend auf 100 Gewichtsteilen der Monomere zum Herstellen des kautschukartigen Polymers, und
wobei die Monomere ein Dien-basiertes Monomer, oder ein Dien-basiertes Monomer und ein Acrylsäureester-basiertes Monomer mit Kohlenstoffatomen von 1 bis 16 sind.

2. Verfahren zum Herstellen des kautschukartigen Polymers nach Anspruch 1, wobei 5 bis 20 Gew.-% der Monomere, welche durch kontinuierliche Injektion zugegeben werden, in einem Mal injiziert oder durch geteilte Injektion zugegeben werden, wenn die Umsatzrate der Polymerisation 30 bis 70% beträgt, und verbliebene Monomere durch kontinuierliche Injektion zugegeben werden.

3. Verfahren zum Herstellen des kautschukartigen Polymers nach Anspruch 2, wobei eine emulgierte Flüssigkeit, umfassend einen Initiator, einen Emulgator, ein Kettenüberträgermittel und einen Elektrolyt, in einem Mal injiziert wird oder durch kontinuierliche Injektion zugegeben wird, wenn die Monomere durch kontinuierliche Injektion zugegeben werden.

4. Verfahren zum Herstellen des kautschukartigen Polymers nach Anspruch 1, wobei das Dien-basierte Monomer mindestens eines ausgewählt aus der Gruppe bestehend aus 1,3-Butadien, Isopren, 2-Chlor-1,3-butadien, Chloropren und Pyperylen und deren Derivate ist; und
wobei das Acrylsäureester-basierte Monomer mit Kohlenstoffatomen von 1 bis 16 ausgewählt ist aus der Gruppe bestehend aus Butylacrylat, Methylacrylat, Ethylacrylat und 2-Ethylhexylacrylat.

5. Verfahren zum Herstellen des kautschukartigen Polymers nach Anspruch 1, wobei 30 bis 70 Gew.-% des Dien-basierten Monomers oder Acrylsäureester-basierten Monomers basierend auf 100 Gewichtsteilen des Monomers in einem Mal injiziert werden.

6. Verfahren zum Herstellen des kautschukartigen Polymers nach Anspruch 1, wobei das Monomer mit einem Vernetzer gemischt wird und dann benutzt wird.

7. Verfahren zum Herstellen des kautschukartigen Polymers nach Anspruch 6, wobei der Vernetzer ausgewählt ist aus der Gruppe bestehend aus Divinylbenzol, Allylmethacrylat, Diallylphthalat, Trimethylolpropan, Triacrylat, Ethylenglycoldiacrylat, Triethylendiacrylat, Tetraethylendiacrylat, Polyethylenglycoldiacrylat und Polyethylenglycoldimethacrylat; und
0,1 bis 3 Gewichtsteile des Vernetzers basierend auf 100 Gewichtsteilen des Monomers verwendet werden.

8. Verfahren zum Herstellen des kautschukartigen Polymers nach Anspruch 3, wobei der Initiator ein Peroxidinitiator oder Persulfatinitiator ist,
wobei der Peroxidinitiator ausgewählt ist aus der Gruppe bestehend aus Diisopropylbenzolhydroperoxid, Cumenhydroperoxid und Tertiärbutylhydroperoxid;
der Persulfatinitiator ausgewählt ist aus der Gruppe bestehend aus Kaliumpersulfat, Ammoniumpersulfat und Natriumpersulfat; und
0,05 bis 2,5 Gewichtsteile des Initiators verwendet werden, basierend auf 100 Gewichtsteilen des Monomers.

9. Verfahren zum Herstellen des kautschukartigen Polymers nach Anspruch 8, wobei der Initiator mit mindestens einem Redoxkatalysator gemischt wird und dann benutzt wird.

10. Verfahren zum Herstellen des kautschukartigen Polymers nach Anspruch 3, wobei der Emulgator ein absorbierender Emulgator ausgewählt aus der Gruppe bestehend aus Kaliumharzsäure, Kaliumfettsäure, Natriumlaurylsulfat und Alkylbenzolsulfonat; ein Carboxylsäure-basierter anionischer reaktiver Emulgator; ein Amid-basierter anionischer Reaktionsemulgator; oder ein reaktiver Emulgator mit einer Acryloylgruppe, Methacryloylgruppe, oder Allylgruppe, oder Prophenylgruppe ist; und
0,5 bis 3 Gewichtsteile des Emulgators basierend auf 100 Gewichtsteilen des Monomers verwendet werden.

11. Verfahren zum Herstellen des kautschukartigen Polymers nach Anspruch 10, wobei eine Mischung aus 20 bis 80 Gew.-% des reaktiven Emulgators und 20 bis 80 Gew.-% des absorbierenden Emulgators verwendet werden.

12. Pfropfcopolymer, umfassend:

    einen Kern umfassend 50 bis 70 Gewichtsteile des kautschukartigen Polymers hergestellt durch das Verfahren nach Anspruch 1, wobei das kautschukartige Polymer einen mittleren Partikeldurchmesser von 250 bis 400 nm (2500 bis 4000 Å), einen Gelgehalt von 70 bis 90% und eine Glasübergangstemperatur bis zu 0°C hat; und
    einen Mantel umgebend den Kern und hergestellt durch Emulsionspolymerisation aus 30 bis 50 Gewichtsteilen einer aromatischen Vinylverbindung und eines Vinylcyanids oder (Methyl)acrylsäureestermonomers.

13. Pfropfcopolymer nach Anspruch 12, wobei die aromatische Vinylverbindung mindestens eine Verbindung ausgewählt aus der Gruppe bestehend aus Styrol, α-Methylstyrol, o-Ethylstyrol, p-Ethylstyrol und Vinyltoluol oder deren Derivaten ist.

14. Pfropfcopolymer nach Anspruch 12, wobei die Vinylcyanidverbindung mindestens eine Verbindung ausgewählt aus der Gruppe bestehend aus Acrylnitril, Methacrylnitril und Ethacrylnitril oder deren Derivaten ist.

15. Kautschukverstärktes thermoplastisches Harz hergestellt durch Extrudieren, Schmelzen und Mischen von 10 bis 50 Gew.-% des Pfropfcopolymers nach Anspruch 12 und 50 bis 95 Gew.-% des Harzes ausgewählt aus der Gruppe bestehend aus Acrylnitril-Styrolharz, Polybutylenterephthalatharz und Polyvinylchloridharz, und dann Herstellen in einer Pellet-Form.

**Revendications**

1. Procédé de fabrication d'un polymère caoutchouteux ayant un diamètre particulaire moyen de 400 nm (2500 à 4000 Å ), une teneur en gel de 70 à 90% et une température de transition vitreuse de jusqu'à 0°C, dans lequel 5 à 70 parties en poids de monomères sont injectés en une seule fois et 30 à 95 parties en poids des monomères sont ajoutés par injection continue lorsque le taux de conversion de la polymérisation est de 40 à 60% de manière à obtenir le polymère caoutchouteux ayant une structure à enveloppe et à noyau basée sur 100 parties en poids des monomères utilisés pour la fabrication du polymère caoutchouteux, et
dans lequel les monomères sont un monomère à base de diène, ou un monomètre à base de diène et un monomère d'acide acrylique à base d'ester portant 1 à 16 atomes de carbone.

2. Procédé de fabrication du polymère caoutchouteux selon la revendication 1, dans lequel 5 à 20 % en poids des monomères qui sont ajoutés par injection continue, sont injectés en une seule fois ou sont ajoutés par injection divisée lorsqu'un taux de conversion de la polymérisation est de 30 à 70% et les monomètres restants sont ajoutés par injection continue.

3. Procédé de fabrication du polymère caoutchouteux selon la revendication 2, dans lequel un liquide émulsifiant contenant une amorce, un émulsifiant, un agent de transfert de chaîne et un électrolyte, est injecté en une seule fois ou est ajouté par injection continue lorsque les monomères sont ajoutés par injection continue.

4. Procédé de fabrication du polymère caoutchouteux selon la revendication 1,
dans lequel le monomètre à base de diène est au moins un monomère sélectionné parmi le groupe constitué de 1,3-butadiène, isoprène, 2-chloro-1,3-butadiène, chloroprène et pypérylène et leurs dérivés ; et
dans lequel le monomère à base d'ester portant 1 à 16 atomes de carbone est sélectionné parmi le groupe constitué d'acrylate de butyle, d'acrylate de méthyle, d'acrylate d'éthyle et d'acrylate de 2-éthylhexyle.

5. Procédé de fabrication du polymère caoutchouteux selon la revendication 1, dans lequel 30 à 70 % en poids du monomètre à base de diène ou du monomère d'acide acrylique à base d'ester constitué de 100 parties en poids du monomère est injecté en une seule fois.

6. Procédé de fabrication du polymère caoutchouteux selon la revendication 1, dans lequel le monomètre est mélangé à un agent de réticulation et ensuite utilisé.

7. Procédé de fabrication du polymère caoutchouteux selon la revendication 6, dans lequel l'agent de réticulation est sélectionné parmi le groupe constitué de benzène divinylique, de méthacrylate d'allyle, de diallylphtalate, de triméthylolpropane, de triacrylate, de diacrylate d'éthylène glycol, de diacrylate de triéthylène, de diacrylate de tétraéthylène, de diacrylate, de polyéthylène glycol et de diméthacrylate de polyéthylène glycol ; et 0,1 à 3 parties en poids de l'agent de réticulation, constitué de 100 parties en poids du monomère, est utilisé.

8. Procédé de fabrication du polymère caoutchouteux de la revendication 3, dans lequel l'amorce est une amorce de peroxyde ou une amorce de persulfate, dans lequel l'amorce de peroxyde est sélectionnée parmi le le groupe constitué d'hydroperoxyde de diisopropylbenzène, d'hydroperoxyde de cumène et d'hydropéroxyde de butyle tertiaire ; l'amorce de persulfate est sélectionnée parmi le groupe constitué de persulfate de potassium, de persulfate d'ammonium et de persulfate de sodium et 0,05 à 2,5 parties en poids de l'amorce, constituée 100 parties en poids du monomère, est utilisée.

9. Procédé de fabrication du polymère caoutchouteux selon la revendication 8, dans lequel l'amorce est mélangée à au moins un catalyseur redox et ensuite utilisée.

10. Procédé de fabrication du polymère caoutchouteux selon la revendication 3, dans lequel l'émulsifiant est une émulsifiant absorbant sélectionné parmi le groupe constitué d'acide de colophane potassique, d'acide gras potassique, de sulfate de sodium laurylé et de de benzène alkylé ; un émulsifiant réactif anionique à base d'acide du carboxyle ; un émulsifiant anionique à base d'amide ou un émulsifiant réactif présentant un groupe acryloyle, un groupe méthacryloyle ou un groupe allyle ou un groupe prophényle et 0,5 à 3 parties en poids de l'émulsifiant, constitué de 100 parties en poids du monomère, est utilisé.

11. Procédé de fabrication du polymère caoutchouteux selon la revendication 10, dans lequel un mélange de 20 à 80% en poids de l'émulsifiant réactif et de 20 à 80% en poids de l'émulsifiant absorbant est utilisé.

12. Copolymére greffe comprenant :

    un noyau comprenant 50 à 70 parties en poids du polymère caoutchouteux produit par le procédé selon la revendication 1, dans lequel le polymère caoutchouteux un diamètre particulaire moyen de 250 à 400 nm (2500 à 4000 □), une teneur en gel de 70 à 90% et un température de transition vitreuse de jusqu'à 0°C ; et une enveloppe entourant le noyau et par polymérisation en émulsion de 30 à 50 en d'un composé de vinyle aromatique et d'un cyanure de vinyle ou d'un monomère d'ester (méth)acrylique).

13. Copolymère selon la revendication 12, dans lequel le composé de vinyle est au un composé sélectionné parmi le groupe de styrène, d'$\alpha$-méthytstyrène, d'o-êthylstyrène, de p-éthylstyrène et de vinyltoluène ou de leurs dérivés.

14. Copolymère greffe selon la revendication 12, dans lequel le composé de cyanure de vinyle est au moins un composé sélectionné parmi le groupe constitué d'acrylonitrile, de méthacrylonitrile et d'éthacrylonitrile ou de leurs dérivés.

15. Résine thermoplastique renforcée de caoutchouc par extrusion, fusion et mélange de 10 à 50% en poids de greffe selon la revendication 12 et de 50 à 95% en poids de résine sélectionnée parmi le groupe constitué de résine d'acrylonitrile-styrène, de résine de polybutylènetéphtalate et de résine de chlorure de polyvinyle, et ensuite traitée en un type de granulé.

**EP 2 404 941 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090118393 A1
- US 20030114580 A1
- US 20040192843 A1
- US 20030060565 A1
- US 7019049 B1
- US 20070123648 A1
- US 20070060710 A1
- US 20070123657 A1